# EUROPEAN PATENT APPLICATION

(11) **EP 4 332 453 A1**
(43) Date of publication of application: **06.03.2024**
(21) Application number: 21939216.4
(22) Date of filing: 27.04.2021
(51) Int. Cl.: F24F 11/74, F24F 11/79, F24F 120/10, F24F 7/007

(54) **BLOWER DEVICE AND BLOWER SYSTEM**

(71) Applicant: MITSUBISHI ELECTRIC CORPORATION, Chiyoda-ku Tokyo 100-8310 (JP)
(72) Inventor: YAMAGUCHI, Harumi, Tokyo 100-8310 (JP); ITO, Shinichi, Tokyo 100-8310 (JP)
(74) Representative: Studio Torta S.p.A.
(86) International application number: PCT/JP2021/016799
(87) International publication number: WO 2022/230055

(57) **Abstract**

An air-sending device includes a fan configured to blow air into a space, an airflow direction adjusting unit configured to adjust an airflow direction of the air blown out from the fan, and a controller configured to control the fan and the airflow direction adjusting unit. The controller is configured to, when a predetermined condition is met, execute a forced swing mode regardless of a setting made by a user for the airflow direction. In the forced swing mode, a swing operation is forcibly performed in which the airflow direction adjusting unit is controlled to change the airflow direction over time.

## Description

### Technical Field

The present disclosure relates to an air-sending device provided with a fan, and to an air-sending system including a plurality of air-sending devices.

### Background Art

In recent years, measures against infectious diseases including a coronavirus disease 2019 (COVID-19) are needed. One of the sources of COVID-19 infection is a floating droplet ejected from the mouth of an infected person. Ventilation of a room is considered to be effective to discharge floating droplets from the room, and the Ministry of Health, Labour and Welfare recommends to perform ventilation that is equivalent to an air exchange rate of twice per hour by opening a window. Meanwhile, performing a so-called 24-hour ventilation, which is a mechanical ventilation equivalent to an air exchange rate of 0.5 times per hour, is required by the Building Standards Act. That is, as measures against infectious diseases, opening a window for ventilation is important in addition to the normal 24-hour ventilation.

Furthermore, the housing frame is more airtight to satisfy the increasing demand for higher housing performance. For this reason, an air stagnation may occur depending on the room arrangement or the layout of a ventilation device. In addition, due to protection of privacy or arrangement of room, the way of opening a window may be restricted, and an air stagnation may also occur depending on how the window is opened. Floating droplets tend to stay at an area where an air stagnation occurs, and thus a high concentration of floating droplets occurs locally.

Moreover, the ventilation is conventionally performed to reduce the concentration of carbon dioxide (CO₂) and to discharge chemical substances causing sick house syndrome to the outside of a room. Because such chemical substances diffuse relatively fast, the chemical substances spread evenly in the room. Thus, the concentrations of such substances can be reduced in the entire room by ventilation. Therefore, it is possible to reduce a health risk just by securing a ventilation amount. On the other hand, floating droplets causing infectious diseases are large in mass and particle diameter, compared with a molecule of CO₂ or a chemical substance, such as formaldehyde. Thus, such a floating droplet spreads slowly and tends to stagnate locally due to the effect of air convection in the room and the influence of gravity. Therefore, indoor ventilation is strongly required from the viewpoint of the measure to prevent infectious diseases. However, a local high concentration of floating droplets is not eliminated simply by opening a window, and an infection risk cannot be reduced sufficiently in some cases.

An air-conditioning apparatus is known that, when a door or window of a room is opened and dust is blown up in the room, automatically collects the dust by sending air in a direction of the door or window (see Patent Literature 1, for example).

### Citation List

### Patent Literature

Patent Literature 1: Japanese Unexamined Patent Application Publication No. 2015-143592

### Summary of Invention

### Technical Problem

Because the air-conditioning apparatus disclosed in Patent Literature 1 sends air intensively to a place where a state is changed, such as a place where a door or window is opened, an air stagnation may occur locally in a room. It is said that, in an air stagnation, floating droplets float in the air for about 20 minutes or so depending on the air environment. Thus, when there are floating droplets in a place where an air stagnation occurs, the droplets are not discharged to the outside, and therefore a state where the concentration of floating droplets is high may be maintained. As described above, even when a door or window is opened, a place where the concentration of floating droplets is locally high and an infectious risk is high may occur.

The present disclosure has been made to overcome the above-mentioned problem, and has an object to provide an air-sending device and an air-sending system capable of taking a countermeasure against infectious diseases.

### Solution to Problem

An air-sending device according to an embodiment of the present disclosure includes a fan configured to blow air into a space, an airflow direction adjusting unit configured to adjust an airflow direction of the air blown out from the fan, and a controller configured to control the fan and the airflow direction adjusting unit. The controller is configured to, when a predetermined condition is met, execute a forced swing mode regardless of a setting made by a user for the airflow direction. In the forced swing mode, a swing operation is forcibly performed in which the airflow direction adjusting unit is controlled to change the airflow direction over time.

### Advantageous Effects of Invention

In the air-sending device and the air-sending system according to embodiments of the present disclosure, air streams in which the direction of airflow is not fixed are generated by performing the forced swing mode in which a swing operation is forcibly performed even when the swing operation is not set by a user. With this configuration, it is possible to prevent a space at which the air-sending device is installed from locally having a high concentration of floating droplets. As a result, the air-sending device according to an embodiment of the present disclosure can implement countermeasures against infectious diseases.

### Brief Description of Drawings

[Fig. 1] Fig. 1 is a circuit diagram illustrating an air-conditioning apparatus 1 according to Embodiment 1.
[Fig. 2] Fig. 2 is a perspective view illustrating an indoor unit 3 according to Embodiment 1.
[Fig. 3] Fig. 3 is a block diagram illustrating the air-conditioning apparatus 1 according to Embodiment 1.
[Fig. 4] Fig. 4 is a diagram explaining a forced swing mode according to Embodiment 1.
[Fig. 5] Fig. 5 is a flowchart illustrating an operation of a controller 15 according to Embodiment 1.
[Fig. 6] Fig. 6 is a diagram explaining the forced swing mode according to Embodiment 2.
[Fig. 7] Fig. 7 is a perspective view illustrating an indoor unit 3A according to Embodiment 3.
[Fig. 8] Fig. 8 is a block diagram illustrating an air-conditioning apparatus 1A according to Embodiment 3.
[Fig. 9] Fig. 9 is a diagram explaining the forced swing mode according to Embodiment 3.
[Fig. 10] Fig. 10 is a flowchart illustrating an operation of the controller 15 according to Embodiment 3.
[Fig. 11] Fig. 11 is a diagram explaining the forced swing mode according to Embodiment 4.
[Fig. 12] Fig. 12 is a flowchart illustrating an operation of the controller 15 according to Embodiment 4.
[Fig. 13] Fig. 13 is a schematic configuration diagram illustrating an air-sending system 100 according to Embodiment 5.
[Fig. 14] Fig. 14 is a schematic configuration diagram illustrating the air-sending system 100 according to Embodiment 5.
[Fig. 15] Fig. 15 is a schematic configuration diagram illustrating the air-sending system 100 according to Embodiment 5.
[Fig. 16] Fig. 16 is a schematic configuration diagram illustrating the air-sending system 100 according to Embodiment 5.
[Fig. 17] Fig. 17 is a flowchart illustrating an operation of the controller 15 according to a modification example of Embodiment 1.

### Description of Embodiments

### Embodiment 1

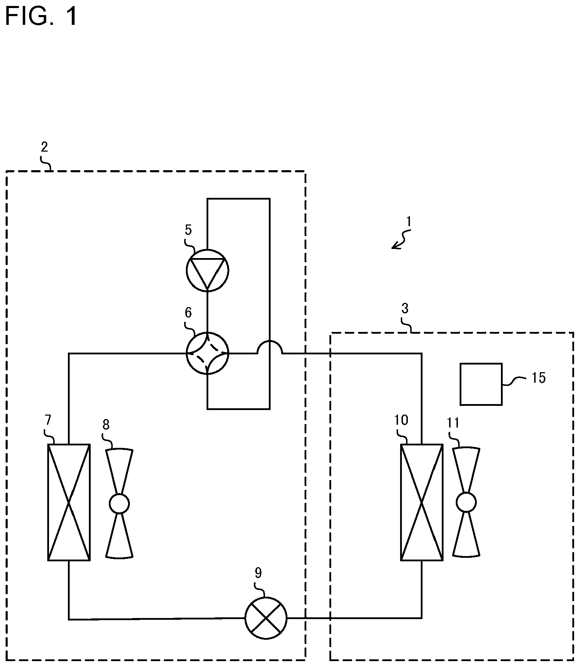

An air-conditioning apparatus 1 according to Embodiment 1 will be described with reference to the drawings. In Embodiment 1, a case where a household air-conditioning apparatus is used as one example of the air-sending device having an air-sending function will be explained. Fig. 1 is a circuit diagram illustrating the air-conditioning apparatus 1 according to Embodiment 1. As shown in Fig. 1, the air-conditioning apparatus 1 includes an outdoor unit 2 and an indoor unit 3.

The outdoor unit 2 includes a compressor 5, a flow switching valve 6, an outdoor heat exchanger 7, an outdoor fan 8, and an expansion valve 9. The indoor unit 3 includes an indoor heat exchanger 10, an indoor fan 11, and a controller 15. The flow switching valve 6, the outdoor heat exchanger 7, the expansion valve 9, and the indoor heat exchanger 10 are connected by a refrigerant pipe. The refrigerant pipe and the devices connected by the refrigerant pipe form a refrigerant circuit.

The compressor 5 is configured to suck refrigerant in a low-temperature, low pressure state, compress the sucked refrigerant, and discharge the refrigerant in a high-temperature, high-pressure state. The flow switching valve 6 is configured to switch a flow direction of the refrigerant in the refrigerant circuit, and is a four-way valve, for example. The outdoor heat exchanger 7 is configured to exchange heat between the refrigerant and an outdoor air, and is a fin-and-tube heat exchanger, for example. The outdoor heat exchanger 7 is configured to function as a condenser in a cooling operation, and function as an evaporator in a heating operation. The outdoor fan 8 is a device that sends an outdoor air to the outdoor heat exchanger 7. The expansion valve 9 is configured to decompress and thereby expand the refrigerant, and is an electronic expansion valve, for example.

The indoor heat exchanger 10 is configured to exchange heat between an indoor air and the refrigerant. The indoor heat exchanger 10 is configured to function as an evaporator in a cooling operation, and function as a condenser in a heating operation. The indoor fan 11 is a device that sends an indoor air to the indoor heat exchanger 10, and is a cross flow fan, for example. Note that, the indoor fan 11 may be a propeller fan or a similar device. The controller 15 is configured to control the air-conditioning apparatus 1.

### Cooling Operation

Here, an operation of the air-conditioning apparatus 1 will be described. First, a cooling operation will be described. The air-conditioning apparatus 1 is configured to perform a cooling operation by switching the flow switching valve 6 to connect a discharge side of the compressor 5 to the outdoor heat exchanger 7. In the cooling operation, the refrigerant sucked by the compressor 5 is compressed by the compressor 5, and then is discharged in a high-temperature, high-pressure gas state. The refrigerant in a high-temperature, high-pressure gas state discharged from the compressor 5 passes through the flow switching valve 6, and flows into the outdoor heat exchanger 7 functioning as a condenser. The refrigerant flowed into the outdoor heat exchanger 7 is condensed and liquefied through heat exchange with an outdoor air sent by the outdoor fan 8. The refrigerant in a liquid state flows into the expansion valve 9, and is decompressed and thereby expanded. Thus, the refrigerant enters a low-temperature, low-pressure, two-phase gas-liquid state. The refrigerant in a two-phase gas-liquid state flows into the indoor heat exchanger 10 functioning as an evaporator. The refrigerant flowed into the indoor heat exchanger 10 is evaporated and gasified through heat exchange with an indoor air sent by the indoor fan 11. At this time, the indoor air is cooled, and thus cooling is performed in the room. Then, the refrigerant, which has been evaporated and entered a low-temperature, low-pressure gas state, passes through the flow switching valve 6, and is sucked into the compressor 5.

### Heating Operation

Next, a heating operation will be described. The air-conditioning apparatus 1 is configured to perform a heating operation by switching the flow switching valve 6 to connect a discharge side of the compressor 5 to the indoor heat exchanger 10. In the heating operation, the refrigerant sucked by the compressor 5 is compressed by the compressor 5, and then is discharged in a high-temperature, high-pressure gas state. The refrigerant in a high-temperature, high-pressure gas state discharged from the compressor 5 passes through the flow switching valve 6, and flows into the indoor heat exchanger 10 functioning as a condenser. The refrigerant flowed into the indoor heat exchanger 10 is condensed and liquefied through heat exchange with an indoor air sent by the indoor fan 11. At this time, the indoor air is heated, and thus heating is performed in the room. The refrigerant in a liquid state flows into the expansion valve 9, and is decompressed and thereby expanded. Thus, the refrigerant enters a low-temperature, low-pressure, two-phase gas-liquid state. The refrigerant in a two-phase gas-liquid state flows into the outdoor heat exchanger 7 functioning as an evaporator. The refrigerant flowed into the outdoor heat exchanger 7 is evaporated and gasified through heat exchange with an outdoor air sent by the outdoor fan 8. Then, the refrigerant, which has been evaporated and entered a low-temperature, low-pressure gas state, passes through the flow switching valve 6, and is sucked into the compressor 5.

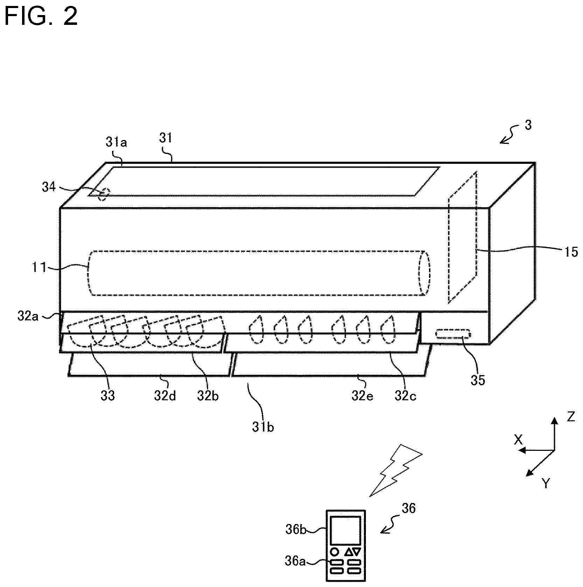

Fig. 2 is a perspective view illustrating the indoor unit 3 according to Embodiment 1. The indoor unit 3 is installed on a wall or a similar location of a room where ventilation is allowed. The room where ventilation is allowed is, for example, a room in which an openable window, a ventilation device, or a natural air supply opening is provided. The ventilation device is, for example, a range hood. As shown in Fig. 2, the indoor unit 3 includes a casing 31, an indoor fan 11, up-and-down flaps 32a to 32e, right-and-left flaps 33, an indoor temperature sensor 34, an infrared communication device 35, and the controller 15.

The casing 31 constitutes a shell of the indoor unit 3. An air inlet 31a and an air outlet 31b are formed on the casing 31. The air inlet 31a is formed on an upper surface of the casing 31. Note that, the air inlet 31a may be formed on a front surface of the casing 31. The air inlet 31a is an opening through which air to be sucked into the inside of the casing 31 passes. The air outlet 31b is formed at a front part or a lower part of the casing 31. The air outlet 31b is an opening through which air to be blown out from the inside of the casing 31 passes.

The indoor fan 11 is housed in the casing 31. The indoor fan 11 extends in a lateral direction (corresponding to the X-axis direction in Fig. 2) of the casing 31. When the indoor fan 11 is a propeller fan, two indoor fans 11 are installed along the lateral direction (corresponding to the X-axis direction in Fig. 2) of the casing 31 with each shaft extending in a vertical direction (corresponding to the Z-axis direction in Fig. 2).

The up-and-down flaps 32a to 32e and the right-and-left flaps 33 are configured to function as an airflow direction adjusting unit that adjusts the direction of airflow blown out from the fan. The up-and-down flap 32a is provided at a front part of the casing 31. The up-and-down flap 32a has a plate-like shape extending in the lateral direction of the casing 31, and covers substantially whole width of the front part of the air outlet 31b. The up-and-down flap 32a is configured to swing in the vertical direction of the casing 31 by a motor (not shown) to adjust the direction of air blown out from the air outlet 31b, in the vertical direction.

The up-and-down flap 32b is provided at an outer side of a lower right part of the casing 31. The up-and-down flap 32b has a plate-like shape extending in the lateral direction of the casing 31, and covers the outer side of the lower right part of the air outlet 31b. The up-and-down flap 32b is configured to swing in the vertical direction of the casing 31 by a motor (not shown) to adjust the direction of air blown out from the air outlet 31b, in the vertical direction.

The up-and-down flap 32c is provided at an outer side of a lower left part of the casing 31. The up-and-down flap 32c has a plate-like shape extending in the lateral direction of the casing 31, and covers the outer side of the lower left part of the air outlet 31b. The up-and-down flap 32c is configured to swing in the vertical direction of the casing 31 by a motor (not shown) to adjust the direction of air blown out from the air outlet 31b, in the vertical direction.

The up-and-down flap 32d is provided at an inner side of a lower right part of the casing 31. The up-and-down flap 32d has a plate-like shape extending in the lateral direction of the casing 31, and covers the inner side of the lower right part of the air outlet 31b. The up-and-down flap 32d is configured to swing in the vertical direction of the casing 31 by a motor (not shown) to adjust the direction of air blown out from the air outlet 31b, in the vertical direction.

The up-and-down flap 32e is provided on an inner side of a lower left part of the casing 31. The up-and-down flap 32e has a plate-like shape extending in the lateral direction of the casing 31, and covers the inner side of the lower left part of the air outlet 31b. The up-and-down flap 32e is configured to swing in the vertical direction of the casing 31 by a motor (not shown) to adjust the direction of air blown out from the air outlet 31b, in the vertical direction.

The right-and-left flaps 33 are provided on a front part of the casing 31. Each of the right-and-left flaps 33 has a plate-like shape extending in a front-back direction of the casing 31. Six right-and-left flaps 33 are provided at a left part of the casing 31, and six right-and-left flaps 33 are provided at a right part of the casing 31. Each right-and-left flap 33 is configured to swing in the lateral direction by a motor (not shown) to adjust the direction of air blown out from the air outlet 31b, in the lateral direction.

The direction of air blown out from the indoor unit 3, that is airflow direction, is determined by a combination of the direction of the up-and-down flaps 32a to 32e and the direction of the right-and-left flaps 33. For example, when the up-and-down flaps 32a to 32e swing upward and the right-and-left flaps 33 swing to the left, the airflow direction is upper right. The configurations of the up-and-down flaps 32a to 32e and the right-and-left flaps 33 are not limited to those described above. The up-and-down flaps 32a to 32e and the right-and-left flaps 33 may be omitted or added, as appropriate.

The indoor temperature sensor 34 is provided inside the casing 31. The indoor temperature sensor 34 is configured to detect a temperature of air passing through the air inlet 31a, that is, the indoor temperature.

The infrared communication device 35 is provided inside the casing 31, and is configured to perform infrared communication with a remote controller 36, which is a dedicated controller for the air-conditioning apparatus 1. The remote controller 36 has an operation unit 36a and a display unit 36b. The operation unit 36a of the remote controller 36 is configured to receive operation inputs from the user. The operation inputs include, for example, switching to a cooling operation, a heating operation, or a fan operation, and setting of temperature, air volume, and airflow direction. The display unit 36b of the remote controller 36 is configured to display an operation status of the air-conditioning apparatus 1. The operation status indicates the operation mode, the airflow direction, the air volume, and other settings being currently controlled. As the operation mode, a normal mode, a forced swing mode, and a recovery mode are available. The operation mode is automatically set independently from the cooling operation, the heating operation, and the air-sending operation. In addition, the display unit 36b of the remote controller 36 is configured to display a start notification and an end notification of the forced swing mode, and a notification of a sudden change in temperature. The operation modes and the notifications will be described later.

The controller 15 is provided as dedicated hardware or a central processing unit (CPU, also called central processor, processing device, arithmetic device, microprocessor, microcomputer, or processor), which executes a program stored in a storage unit 51. When the controller 15 is dedicated hardware, the controller 15 corresponds to, for example, a single circuit, a composite circuit, an application specific integrated circuit (ASIC), a field-programmable gate array (FPGA), or a combination of those circuits.

When the controller 15 is a CPU, each function to be executed by the controller 15 is achieved by software, firmware, or a combination of software and firmware. The software or the firmware is described as a program and is stored in the storage unit 51. The CPU is configured to read out and execute the program stored in a storage device, to thereby achieve each of the functions.

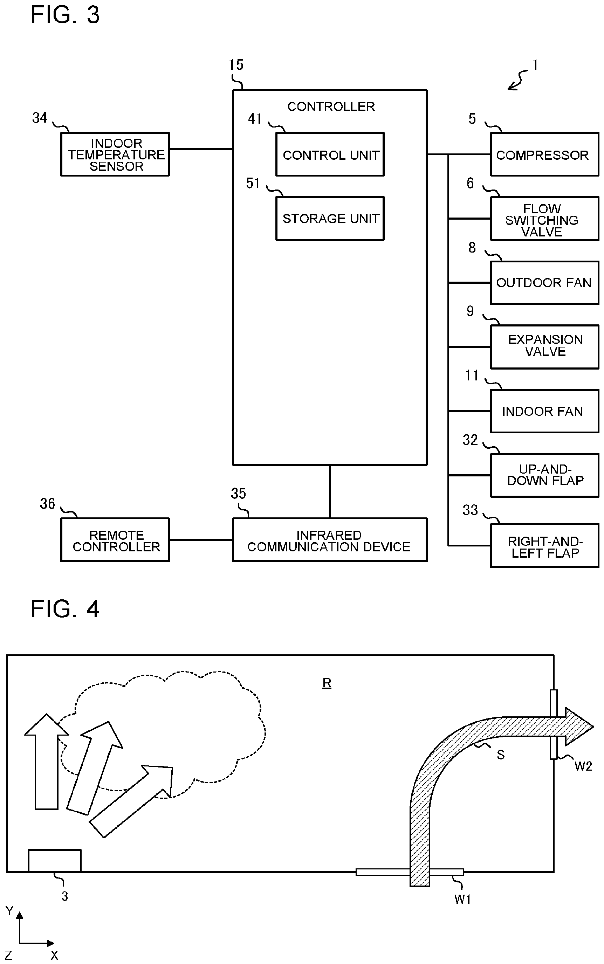

Fig. 3 is a block diagram illustrating the air-conditioning apparatus 1 according to Embodiment 1. Hereinafter, the up-and-down flaps 32a to 32e are collectively called up-and-down flaps 32, as shown in Fig. 3. The controller 15 has a control unit 41 and the storage unit 51.

The control unit 41 is configured to set each operation mode based on the indoor temperature detected by the indoor temperature sensor 34 and the operation input of the user. Here, each operation mode to be set by the control unit 41 will be described. The normal operation mode is an operation mode executed in a normal time in which a first start condition, which will be described later, is not satisfied. In the normal mode, the control unit 41 is configured to cause the air-conditioning apparatus 1 to perform a cooling operation, a heating operation, or an air-sending operation. The control unit 41 is configured to, when a cooling or heating operation is performed, control the compressor 5, the flow switching valve 6, the outdoor fan 8, and the expansion valve 9 so that the indoor temperature is adjusted at the temperature based on the operation input of the user.

The forced swing mode is an operation mode that is executed when the first start condition is met. In the forced swing mode, the airflow direction, swing speed, and the air volume are controlled not based on the operation inputs of the user but based on predetermined settings. The control unit 41 is configured to display a start notification on the remote controller 36 when the forced swing mode is started. In addition, the control unit 41 is configured to display an end notification on the remote controller 36 when the forced swing mode is ended. Furthermore, the control unit 41 is configured to display a notification of a sudden change in temperature on the remote controller 36 in the forced swing mode.

The first start condition is a condition that the time elapsed from the start of the previous forced swing mode reaches a first time. When the forced swing mode has not been performed since the operation of the air-conditioning apparatus 1 started, the first start condition is a condition that the time elapsed from the start of the air-conditioning apparatus 1 reaches the first time. The first time is set according to the frequency of necessary indoor ventilation. The first time is set to, for example, 30 minutes. The "30 minutes" is a time interval that corresponds to the ventilation method recommended by the Ministry of Health, Labour and Welfare, in which a window is opened twice every hour for several minutes. Note that, the time elapsed from the previous infection risk reduction mode may be counted based on the end time. The controls of the airflow direction, swing speed, and air volume, and the notifications to be given to the user will be described in detail below.

Now, the airflow direction in the forced swing mode will be described. In the forced swing mode, the control unit 41 is configured to cause the air-conditioning apparatus 1 to forcibly perform a swing operation even when the swing operation is not set. The swing operation is one of the settings set by the user regarding the airflow direction. In the swing operation, the airflow direction varies over time. That is, in the forced swing mode, the control unit 41 is configured to control the up-and-down flaps 32 and the right-and-left flaps 33 so that the airflow direction changes over time. A combination of movement of the up-and-down flaps 32 and movement of the right-and-left flaps 33 in the forced swing mode is set as a swing pattern, and the swing pattern is stored in advance in the storage unit 51. Based on the set swing pattern, the control unit 41 is configured to control the up-and-down flaps 32 and the right-and-left flaps 33 so that the airflow direction is changed to follow, for example, a rectangular path, that is the airflow moves from the lower left, to lower right, to upper right, to upper left direction. Note that, the airflow direction may be changed only in the vertical or lateral direction, or may be changed in an oblique direction by combining the vertical direction and the lateral direction. Furthermore, the swing pattern may be set so that the airflow direction is changed to follow a path of an L-shape, an M-shape, an S-shape, a U-shape, a V-shape, a Z-shape, a figure of eight shape, or a laterally or vertically rotated or inverted shape thereof.

Now, the swing speed in the forced swing mode will be described. The swing speed is a speed of changing the airflow direction by the up-and-down flaps 32 and the right-and-left flaps 33, and corresponds to angle change amounts per time of the up-and-down flaps 32 and the right-and-left flaps 33. In the forced swing mode, the control unit 41 is configured to control the motors of the up-and-down flaps 32 and the right-and-left flaps 33 so that the swing speed is set to be slower than a predetermined speed. The predetermined speed is, for example, the swing speed in the normal mode. With a slower swing speed, the traveling distance of air can be increased. The swing speed is set for the purpose of sending air blown out from the indoor unit 3 to every corner of the room. As long as this purpose is accomplished, the swing speed may be set faster than the swing speed in the normal mode.

Now, the air volume in the forced swing mode will be described. In the forced swing mode, the control unit 41 is configured to control the indoor fan 11 so that the air volume is set to be the maximum. The air volume is set for the purpose of sending air blown out from the indoor unit 3 to every corner of the room. As long as this purpose is accomplished, the air volume is not necessarily maximum.

The start notification and the end notification of the forced swing mode will be described. When the forced swing mode is to be started, the control unit 41 is configured to display a start notification on the display unit 36b of the remote controller 36 via the infrared communication device 35. The start notification includes information indicating that the operation mode will enter the forced swing mode, and information asking the user to open a window in the room. When the forced swing mode is ended, the control unit 41 is configured to display an end notification on the display unit 36b of the remote controller 36 via the infrared communication device 35. The end notification includes information indicating that the forced swing mode will be ended, and information asking the user to close the window in the room. When these start and end notifications are given, the user can notice that the operation of the air-conditioning apparatus 1 is changed even when the user does not set the swing operation in the normal operation.

Fig. 4 is a diagram explaining the forced swing mode according to Embodiment 1. Fig. 4 is an overhead view of a room R in a simplified form. The signs W1 and W2 indicate windows. The window W1 and the window W2 are supposed to be opened by the user for ventilation of the room R, when the user sees the start notification displayed on the remote controller 36. As shown in Fig. 4, a natural air stream S is generated in the room R by the wind passing through the opened windows.

Meanwhile, the natural air stream S is generated depending on multiple factors, such as the room layout, the size and location of the windows, the presence or absence of ventilation device, and the state of outside air. Thus, it is difficult to actually detect how the natural air stream S is occurring in the room. Therefore, it is also difficult to actually detect a place where the concentration of floating droplets is likely to be high. Note that, although a concentration distribution of floating droplets can be measured by a sensor, such a sensor that measures the concentration of floating droplets is often expensive. Thus, installing such a sensor in the air-conditioning apparatus 1 for household use is impractical. As described above, when the room R is ventilated, it is difficult to find out the air-sending direction providing the most efficient ventilation.

In Embodiment 1, by setting the airflow direction to the forced swing setting, an air stream blown out from the air-conditioning apparatus 1 is prevented from travelling in a certain direction for a long time. As a result, the air-conditioning apparatus 1 can promote the discharge of floating droplets to the outside of the room without blocking the natural air stream S.

Now, the notification of a sudden change in temperature in the forced swing mode will be described. The notification of a sudden change in temperature notifies the user that change in the indoor temperature is large. In the forced swing mode, the control unit 41 is configured to provide the notification of a sudden change in temperature to the user, when the change in the indoor temperature is large. More specifically, the control unit 41 is configured to obtain a change in the indoor temperature in a given time period. When the obtained change in the indoor temperature is equal to or larger than a threshold temperature, the notification of a sudden change in temperature is displayed on the display unit 36b of the remote controller 36. Note that, the threshold temperature may be changed depending on which the operation, cooling operation or heating operation, is performed. For example, the threshold temperature is 5 degrees C in the cooling operation and 3 degree C in the heating operation. This is because a temperature difference between inside and outside of the room is large during winter in which the heating operation is performed, and thus change in temperature in the room is large when the windows are opened. Because there is a possibility of excess ventilation, the notification of a sudden change in temperature includes information asking the user to close the windows of the room or to shorten the time for opening the windows. With this information, comfortability and health of the user can be kept.

Note that, even in the forced swing mode, the control unit 41 is configured to cause the air-conditioning apparatus 1 to perform the cooling operation, the heating operation or the fan operation, and, when the cooling or heating operation is performed, the control unit 41 is configured to control the compressor 5, the flow switching valve 6, the outdoor fan 8, and the expansion valve 9 so that the indoor temperature is adjusted at the temperature based on the operation input of the user.

The forced swing mode is ended when a first end condition is met. The first end condition is a condition that a duration time of the forced swing mode reaches a second time. The second time is, for example, five minutes. That is, the forced swing mode is continued for five minutes.

The recovery mode is an operation mode executed after the forced swing mode is ended. In the recovery mode, the airflow direction, the swing speed, and the air volume are controlled in the same way as the forced swing mode. In the recovery mode, the notification of a sudden change in temperature or other notifications are not displayed.

Note that, even in the recovery mode, the control unit 41 is configured to cause the air-conditioning apparatus 1 to perform the cooling operation, the heating operation or the fan operation, and, when the cooling or heating operation is performed, the control unit 41 is configured to control the compressor 5, the flow switching valve 6, the outdoor fan 8, and the expansion valve 9 so that the indoor temperature is adjusted at the temperature based on the operation input of the user.

The recovery mode is ended when a second end condition is met. The second end condition is a condition that a duration time of the recovery mode reaches a third time. The third time is, for example, three minutes. That is, the recovery mode is continued for three minutes.

By performing the recovery mode, a local high concentration of floating droplets in the room can be eliminated, which is generated when the user closed the windows after checking the end notification of the forced swing mode. Note that, the recovery mode may be omitted.

The storage unit 51 is, for example, a random access memory (RAM), a read-only memory (ROM), a flash memory, an erasable programmable read-only memory (EPROM), an electrically erasable programmable read-only memory (EEPROM), or other types of non-volatile or volatile semiconductor memory. Note that, some of the functions of the controller 15 may be achieved by dedicated hardware, and other functions thereof may be achieved by software or firmware. The storage unit 51 stores, for example, data on the first time, the second time, the third time, the swing patterns of the up-and-down flaps 32 and the right-and-left flaps 33, the threshold temperature, a control value of the indoor fan 11 relating to air volume control, and a control value of a motor relating to swing speed control. In addition, the storage unit 51 stores, at predetermined intervals, data on the time from the start-up of the air-conditioning apparatus 1 and the elapsed time from the previous transition of operation mode.

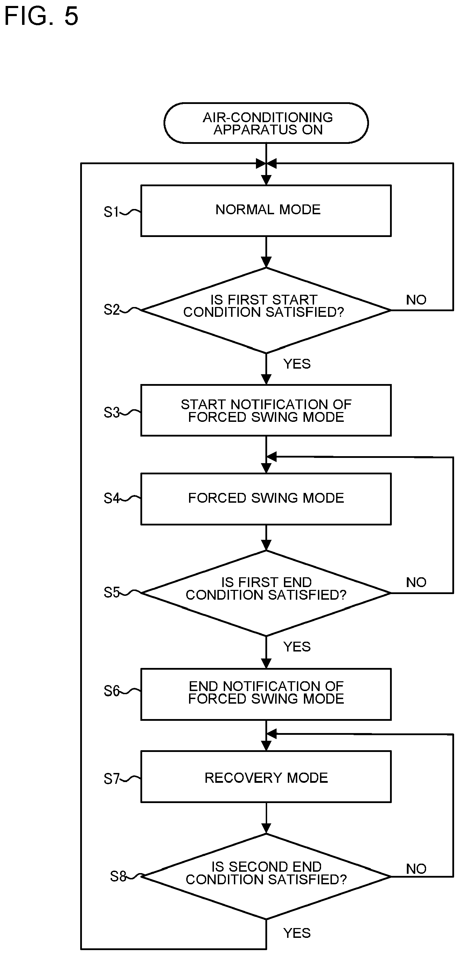

Fig. 5 is a flowchart illustrating an operation of the controller 15 according to Embodiment 1. The operation of the controller 15 will be described with reference to Fig. 5. First, when the air-conditioning apparatus 1 is turned on, the control unit 41 causes the air-conditioning apparatus 1 to operate in the normal mode (S1). The control unit 41 periodically determines whether or not the first start condition is met during execution of the normal mode (S2). When the first start condition is not satisfied (NO in S2), the control unit 41 continues the normal mode (S1).

When the first start condition is met (YES in S2), the control unit 41 performs notification of start of the forced swing mode (S3), and causes the air-conditioning apparatus 1 to operate in the forced swing mode (S4). The control unit 41 periodically determines whether or not the first end condition is met during execution of the forced swing mode (S5). When the first end condition is not satisfied (NO in S5), the control unit 41 continues the forced swing mode (S4).

When the first end condition is met (YES in S5), the control unit 41 performs notification of end of the forced swing mode (S6), and causes the air-conditioning apparatus 1 to operate in the recovery mode (S7). The control unit 41 periodically determines whether or not the second end condition is met during execution of the recovery mode (S8). When the second end condition is not satisfied (NO in S8), the control unit 41 continues the recovery mode (S7). When the second end condition is met (YES in S8), the control unit 41 causes the air-conditioning apparatus 1 to operate in the normal mode (S1).

Because the air-sending device of Embodiment 1 operates in the forced swing mode, in which the swing operation is forcibly performed, even when the swing operation is not set by the user, air streams in which the direction of airflow is not fixed are generated. Thus, it is possible to prevent a space at which the air-sending device is installed from locally having a high concentration of floating droplets. As a result, the air-sending device according to the embodiment of the present disclosure can implement countermeasures against infectious diseases.

### Embodiment 2

Embodiment 2 differs from Embodiment 1 in that the time of sending air and the volume of air sent to a ventilation opening or a ventilation device are decreased. In Embodiment 2, the same features as those of Embodiment 1 will be denoted by the same reference signs, and their descriptions will be omitted. Differences from Embodiment 1 will be mainly described in Embodiment 2.

The controller 15 is configured to detect the position of a ventilation opening or a ventilation device by using the remote controller 36. Although the method for detection is not limited to any particular method, a detection method may be used in which the coordinates of the position of a ventilation opening or a ventilation device is detected based on, for example, a communication intensity obtained by placing the remote controller 36 to the vicinity of the ventilation opening or the ventilation device. Alternatively, the position of a ventilation opening or a ventilation device may be input from the remote controller 36 according to the airflow direction. The examples of the ventilation opening include an air supply opening and an exhaust opening for Class 1 ventilation, an exhaust opening for Class 2 ventilation, an air supply opening for Class 3 ventilation, which are provided in the room, and an undercut portion of a door provided in the room.

In Embodiment 2 also, the controller 15 is configured to cause the air-conditioning apparatus 1 to operate in the normal mode, the forced swing mode, and the recovery mode. Timings for start and end of the normal mode, the forced swing mode, and the recovery mode of Embodiment 2 are controlled in the same way as those in Embodiment 1.

In the forced swing mode of Embodiment 2, the swing speed and the air volume are changed based on the position of a ventilation opening or a ventilation device. Now, the swing speed in the forced swing mode will be described. In the forced swing mode, the control unit 41 is configured to control the up-and-down flaps 32 and the right-and-left flaps 33 so that the swing speed for corresponding to a direction in which a ventilation opening or a ventilation device is set to be faster than the swing speed for corresponding to a direction in which a ventilation opening or a ventilation device is not detected. Note that, the phrase "for corresponding to a direction" means "for sending an air stream blown out from the indoor unit 3 to the direction". In addition, the control unit 41 is configured to increase the swing speed as the distance to the detected ventilation opening or device decreases.

Now, the air volume in the forced swing mode will be described. In the forced swing mode, the control unit 41 is configured to control the indoor fan 11 so that the air volume for corresponding to a direction in which a ventilation opening or a ventilation device is detected is set to be smaller than the air volume for corresponding to a direction in which a ventilation opening or a ventilation device is not detected. In addition, the control unit 41 is configured to reduce the air volume as the distance to the detected ventilation opening or device decreases.

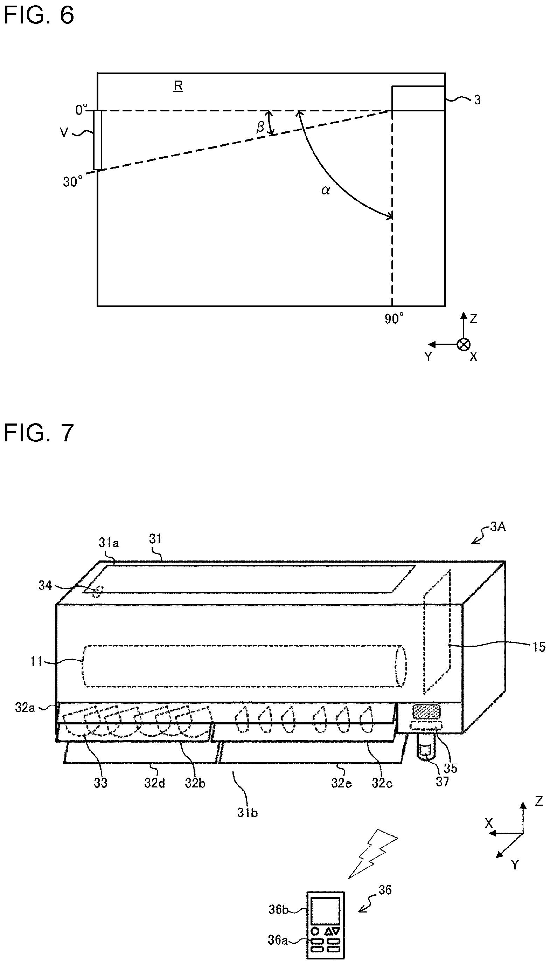

Fig. 6 is a diagram explaining the forced swing mode according to Embodiment 2. Fig. 6 shows the room R viewed from the side (corresponding to the X-axis direction in Fig. 6). Fig. 6 shows a vertical air-sending range α of the normal mode and a vertical air-sending range β, within the air-sending range α, for corresponding to the position at which a ventilation opening V is provided. Note that, the vertical air-sending range α is from 0 degrees to 90 degrees, when the angle is represented as the angle of the up-and-down flap 32 and increases as the up-and-down flap 32 rotates downward, with the horizontal direction (corresponding to a direction toward which an XY plane in Fig. 6 spreads) defined as 0 degrees. In addition, the vertical air-sending range β is from 0 degrees to 30 degrees. The control unit 41 is configured to set the swing speed of the up-and-down flaps 32 moving in the range from 0 degrees to 30 degrees to be faster than the swing speed of the up-and-down flaps 32 moving in the range from 30 degrees to 90 degrees. As a result, the time of sending air to the ventilation opening V is reduced in the forced swing mode. The control unit 41 is configured to set the air volume of the indoor fan 11 for the range from 0 degrees to 30 degrees to be less than the air volume of the indoor fan 11 for the range from 30 degrees to 90 degrees. As a result, the air volume to the ventilation opening V is reduced in the forced swing mode.

In the forced swing mode, when a ventilation opening or a ventilation device is not detected, the control unit 41 is configured to keep the swing speed constant in the air-sending range α. In addition, when a ventilation opening or a ventilation device is detected by a detection unit 42 but is located outside the air-sending range α that is set in the normal mode, the control unit 41 is configured to keep the swing speed constant in the air-sending range α.

Note that, although the angle of each of the up-and-down flaps 32a to 32e is not described to simplify the explanation, the angles of the up-and-down flaps 32a to 32e may be the same angle or may be different from each other as long as the time of sending air and the volume of air sent to a ventilation opening or a ventilation device are reduced. Furthermore, although the control of the up-and-down flaps 32 is described without referring to the arrangement of the ventilation opening V in the lateral direction, control of the right-and-left flaps 33 is also performed for the lateral direction.

Because the swing speed and the air volume are controlled as described above, the swing speed and the air volume in the forced swing mode are equal to those in the normal mode in some cases. In addition, the swing speed and the air volume in the forced swing mode may vary each time.

In Embodiment 2, each of the notifications to the user in the forced swing mode is executed in the same way as Embodiment 1.

In the recovery mode of Embodiment 2, the airflow direction, the swing speed, and the air volume are controlled in the same way as in the forced swing mode of Embodiment 2.

According to Embodiment 2, the time of sending air to a ventilation opening or a ventilation device is shortened, and the air volume toward the ventilation opening or ventilation device is reduced. Thus, a ventilation flow passing through the ventilation opening or ventilation device is not interrupted. Therefore, discharge of floating droplets to the outside can be promoted.

### Embodiment 3

Fig. 7 is a perspective view illustrating an indoor unit 3A according to Embodiment 3. As shown in Fig. 7, Embodiment 3 differs from Embodiment 2 in that the air-conditioning apparatus 1 is provided with an infrared sensor 37, and is configured to control the swing speed and the air volume based on the position of a person staying the room. In Embodiment 3, the same features as those of Embodiment 2 will be denoted by the same reference signs, and their descriptions will be omitted. Differences from Embodiment 2 will be mainly described in Embodiment 3.

The infrared sensor 37 is provided at the casing 31 of the indoor unit 3A. The infrared sensor 37 is configured to capture a thermal image in the room, and transmit the captured thermal image to the controller 15 of the air-conditioning apparatus 1.

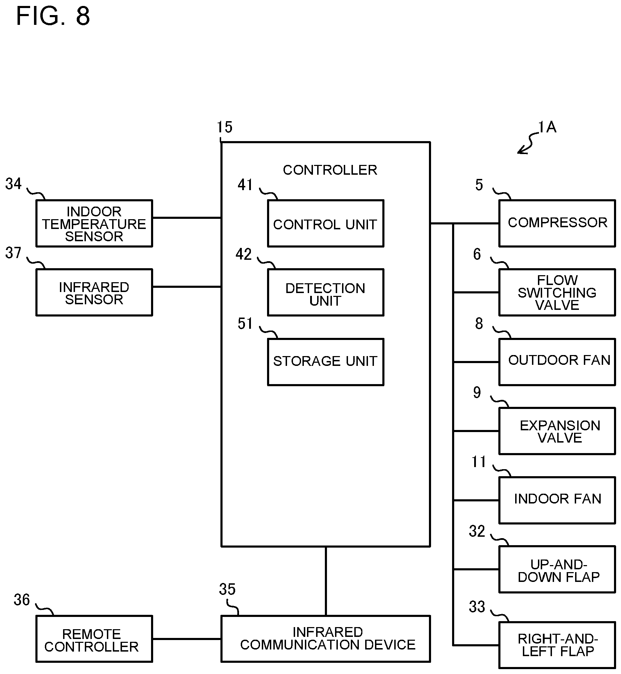

Fig. 8 is a block diagram illustrating the air-conditioning apparatus 1 according to Embodiment 3. As shown in Fig. 8, the controller 15 includes a detection unit 42, in addition to the features described in Embodiment 1. The detection unit 42 is configured to detect the presence/absence of a person staying in the room, the number of people staying in the room, and the position of each person staying in the room, based on the thermal image transmitted from the infrared sensor 37. Note that, a person staying in a room is one example of the user when the space where the air-sending device is installed is a room. The detection method may be a conventional known method, such as comparing the thermal image with a thermal image of the same room captured when no person is present.

In Embodiment 3 also, the controller 15 is configure to perform the normal mode, the forced swing mode, and the recovery mode.

The normal mode of Embodiment 3 is an operation mode executed in a normal time in which a second start condition, which will be described later, is not satisfied.

The forced swing mode is executed when the second start condition is met. For the forced swing mode executed at the first time, the second start condition is a condition that the elapsed time from the previous forced swing mode or a staying time in the room, whichever is shorter, reaches the first time. The staying time is an elapsed time after multiple people staying in the room are detected. In addition, for the forced swing mode executed at the second and subsequent times, the second start condition is a condition that the elapsed time from the previous forced swing mode reaches the first time. Note that, the staying time may be an elapsed time after one person staying in the room is detected.

For example, when the first time is 30 minutes, the elapsed time is 20 minutes, and the staying time is 15 minute, the determination is performed based on the staying time, which is 15 minutes and is shorter compared with the elapsed time, and thus the forced swing mode will be performed 15 minutes later.

The staying time may be reset when a predetermined time has passed since no person staying in the room was detected. The predetermined time is, for example, one hour. Until the predetermined time passes, the staying time is accumulated. That is, even when no one was detected in the room once but a person staying in the room is detected again before one hour passes, the staying time is not reset but accumulated.

In the forced swing mode of Embodiment 3, the airflow direction, the swing speed, and the air volume are changed based on the position of a person staying in the room. The airflow direction in the forced swing mode will be described. In the forced swing mode, the control unit 41 is configured to control the up-and-down flaps 32 and the right-and-left flaps 33 so that a destination of the air traveling in the airflow direction includes the detected position of the person staying in the room. More specifically, the control unit 41 is configured to, for example, cause the up-and-down flaps 32 and the right-and-left flaps 33 to swing so that the airflow direction is changed with the detected direction of the person as the center.

Now, the swing speed in the forced swing mode will be described. In the forced swing mode, the control unit 41 is configured to control the up-and-down flaps 32 and the right-and-left flaps 33 so that the swing speed for corresponding to a direction in which a person staying in the room is detected is set to be faster than the swing speed for corresponding to a direction in which a person staying in the room is not detected. In addition, the control unit 41 is configured to increase the swing speed as the distance to the position of the detected person decreases. Furthermore, the control unit 41 is configured to change the swing speed to follow the movement of the person staying in the room during the forced swing mode.

Now, the air volume in the forced swing mode will be described. In the forced swing mode, the control unit 41 is configured to control the indoor fan 11 so that the air volume for corresponding to a direction in which a person staying in the room is detected is set to be larger than the air volume for corresponding to a direction in which a person staying in the room is not detected. In addition, the control unit 41 is configured to increase the air volume as the distance to the detected person staying in the room decreases. Furthermore, the control unit 41 is configured to change the air volume to follow the movement of the person staying in the room during the forced swing mode.

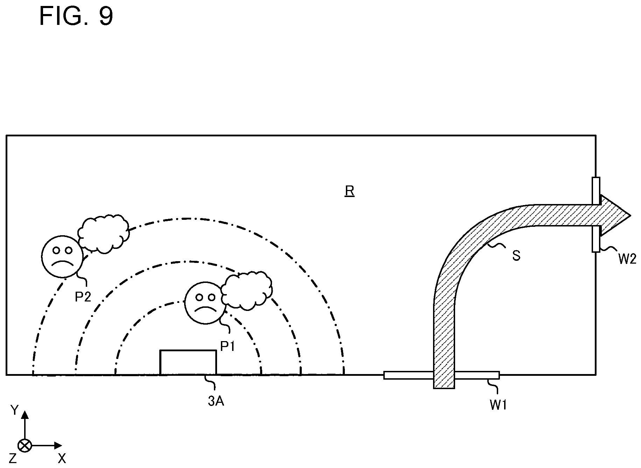

Fig. 9 is a diagram explaining the forced swing mode according to Embodiment 3. Fig. 9 is an overhead view of the room R in a simplified form. In Fig. 9, a person P1 staying in the room is detected at a close position, compared with a person P2 staying in the room. Thus, in a case of Fig. 9, the up-and-down flaps 32 and the right-and-left flaps 33 are caused to swing so that the swing speeds thereof increase in the order of a case for corresponding to the person P1, a case for corresponding to the person P2, and the other case. In addition, the indoor fan 11 is caused to increase the air volume in the order of a case for corresponding to the person P1, a case for corresponding to the person P2, and the other case.

Because the swing speed and the air volume are controlled as described above, the swing speed and the air volume in the forced swing mode are equal to those in the normal mode in some cases. In addition, the swing speed and the air volume in the forced swing mode may vary each time.

In Embodiment 3, each of the notifications to the user in the forced swing mode is executed in the same way as Embodiment 1 or 2.

In the recovery mode of Embodiment 3, the airflow direction, the swing speed, the air volume are controlled in the same way as the forced swing mode of Embodiment 3.

The storage unit 51 is configured to store the staying time, in addition to the information described in Embodiment 1.

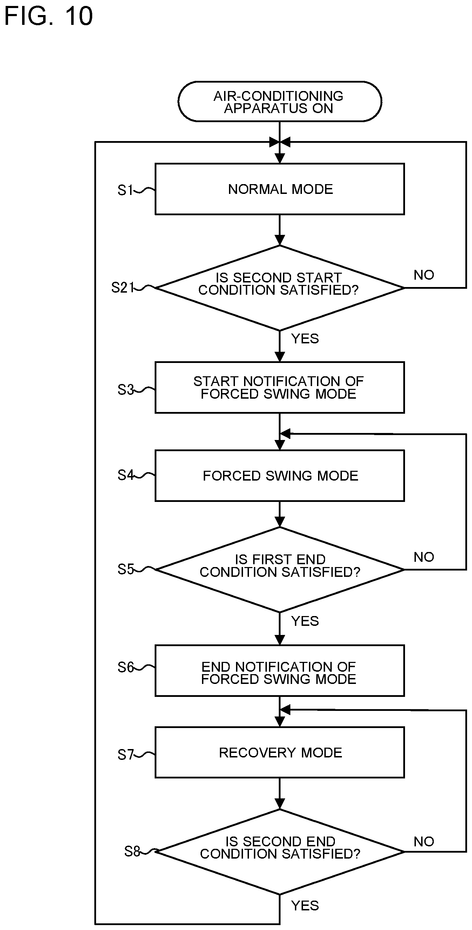

Fig. 10 is a flowchart illustrating an operation of the controller 15 according to Embodiment 3. First, when the air-conditioning apparatus 1 is turned on, the control unit 41 causes the air-conditioning apparatus 1 to operate in the normal mode (S1). The control unit 41 periodically determines whether or not the second start condition is met during execution of the normal mode (S21). When the second start condition is not satisfied (NO in S21), the control unit 41 continues the normal mode (S1).

When the second start condition is met (YES in S21), the control unit 41 performs notification of start of the forced swing mode (S3), and causes the air-conditioning apparatus 1 to operate in the forced swing mode (S4). The subsequent steps (S5 to S8) are the same as those of Embodiment 1, except that the controls to be performed during the forced swing mode are different, and thus the descriptions for the subsequent steps are omitted.

According to Embodiment 3, the second start time is set based on the staying time. Because floating droplets are discharged from the body of a person staying in the room, the air-conditioning apparatus 1 of Embodiment 3 can urge the person staying in the room to perform indoor ventilation at appropriate timing when further ventilation is required.

In addition, according to Embodiment 3, the airflow direction, the swing speed, and the air volume are controlled based on the position of a person staying in the room. With this feature, a local high concentration of floating droplets in the space where the air-sending device is installed can be eliminated more efficiently.

### Embodiment 4

Embodiment 4 differs from Embodiment 3 in that the time of sending air to a window and the volume of the air are reduced. In Embodiment 4, the same features as those of Embodiment 3 will be denoted by the same reference signs, and their descriptions will be omitted. Differences from Embodiment 1 will be mainly described in Embodiment 4.

The infrared sensor 37 is configured to capture a thermal image in the room, and transmit the captured thermal image to the controller 15 of the air-conditioning apparatus 1. The detection unit 42 of the controller 15 is configured to detect the position of a window and an open/close state of the window based on the thermal image transmitted from the infrared sensor 37. The position of a window is determined in such a manner that, for example, when a temperature difference between the temperature of a part of a wall and the temperature of the wall around the part is equal to or larger than a predetermined value, the part is determined as a window. The coordinates of that part are stored as the position of the window. For the open/close state of the window, when the temperature at the coordinates of the window is changed by a predetermined value or more within a predetermined time, it is determined that the window is opened. The infrared sensor 37 is configured to capture a thermal image in the room and transmit the image to the controller 15 of the air-conditioning apparatus 1.

In Embodiment 4 also, the controller 15 is configured to cause the air-conditioning apparatus 1 to operate in the normal mode, the forced swing mode, and the recovery mode.

The normal mode of Embodiment 4 is an operation mode executed in a normal time in which a third start condition, which will be described later, is not satisfied.

The forced swing mode of Embodiment 4 is executed when the third start condition is met. The third start condition is a condition that a window is opened.

In the forced swing mode, the swing speed and the air volume are changed based on the position of the opened window. The swing speed in the forced swing mode will be described. In the forced swing mode, the control unit 41 is configured to control the up-and-down flaps 32 and the right-and-left flaps 33 so that the swing speed for corresponding to a direction in which the opened window is detected is set to be faster than the swing speed for corresponding to other directions in which the opened window is not detected. In addition, the control unit 41 is configured to increase the swing speed as the distance to the opened window decreases.

Now, the air volume in the forced swing mode will be described. In the forced swing mode, the control unit 41 is configured to control the indoor fan 11 to adjust the volume of air coming through the up-and-down flaps 32 and the right-and-left flaps 33 so that the air volume for corresponding to a direction in which the opened window is detected is set to be smaller than the air volume for corresponding to other directions in which the opened window is not detected. In addition, the control unit 41 is configured to reduce the air volume as the distance to the opened window decreases.

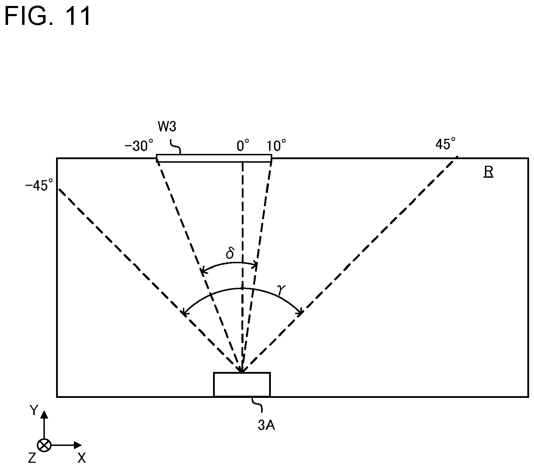

Fig. 11 is a diagram explaining the forced swing mode according to Embodiment 4. Fig. 11 is an overhead view of the room R in a simplified form. Fig. 11 shows a lateral air-sending range γ of the normal mode and a lateral air-sending range δ, within the air-sending range γ, for corresponding to the position at which an opened window W3 is detected. Note that, the air-sending range γ is from -45 degrees to 45 degrees, when the angle is represented as the angle of the right-and-left flap 33 using the direction (corresponding to a direction toward which a YZ plane in Fig. 11 spreads) that the indoor unit 3A faces as zero degrees, and increases as the right-and-left flap 33 rotates rightward. In addition, the air-sending range δ is from -30 degrees to 10 degrees. The control unit 41 is configured to set the swing speed of the right-and-left flaps 33 moving in the range from -30 degrees to 10 degrees to be faster than the swing speed of the right-and-left flaps 33 moving in the range from -45 degrees to -30 degrees and the range from 10 degrees to 45 degrees. As a result, the time of sending air to the opened window W3 is reduced in the forced swing mode. The control unit 41 is configured to set the air volume of the indoor fan 11 for the range from -30 degrees to 10 degrees to be smaller than the air volume of the indoor fan 11 for the range from -45 degrees to -30 degrees and the range from 10 degrees to 45 degrees. As a result, the air volume to the opened window W3 is reduced in the forced swing mode.

In the forced swing mode, when no opened window is detected by the detection unit 42, the control unit 41 is configured to cause the air-conditioning apparatus 1 to send air in the direction between the front angle and 45-degree angle on the right side, in the same way as the normal mode. In addition, when an opened window is detected by a detection unit 42 but is located outside the air-sending range that is set in the normal mode, the control unit 41 is configured to cause the air-conditioning apparatus 1 to send air in the direction between the front angle and 45-degree angle on the right side, in the same way as the normal mode.

Note that, although the angle of each of the right-and-left flaps 33 is not described to simplify the explanation, the angles of the right-and-left flaps 33 may be the same angle or may be different from each other as long as the time of sending air and the volume of air sent to an opened window are reduced. Furthermore, although the control of the right-and-left flaps 33 was described without referring to the arrangement of the window in the vertical direction, control of the up-and-down flaps 32 is also performed for the vertical direction.

In the forced swing mode, when an opened window is not detected by the detection unit 42, the control unit 41 is configured to keep the swing speed constant in the air-sending range γ. In addition, when an opened window is detected by a detection unit 42 but is located outside the air-sending range γ that is set in the normal mode, the control unit 41 is configured to keep the swing speed constant in the air-sending range γ.

Because the swing speed and the air volume are controlled as described above, the swing speed and the air volume in the forced swing mode are equal to those in the normal mode in some cases. In addition, the swing speed and the air volume in the forced swing mode may vary each time.

In the forced swing mode of Embodiment 4, the airflow direction, the swing speed, and the air volume are controlled based on not only the position of an opened window but also the position of a person staying in the room, as described in the description of the forced swing mode of Embodiment 3.

The forced swing mode is continued until a third end condition is met. The third end condition is a condition that the window is closed.

In a start or end notification to the user, of the forced swing mode of Embodiment 4, information asking the user to open a window or information asking the user to close the window is omitted. The other notifications are the same as those of Embodiments 1 to 3.

In the recovery mode of Embodiment 4, the airflow is directed to a person staying in the room, and the air volume is set to be larger than the air volume of the forced swing mode of Embodiment 4. As a result, even when a window is closed, floating droplets can be effectively dispersed by directing the airflow to a person staying in the room, who is the source of the floating droplets.

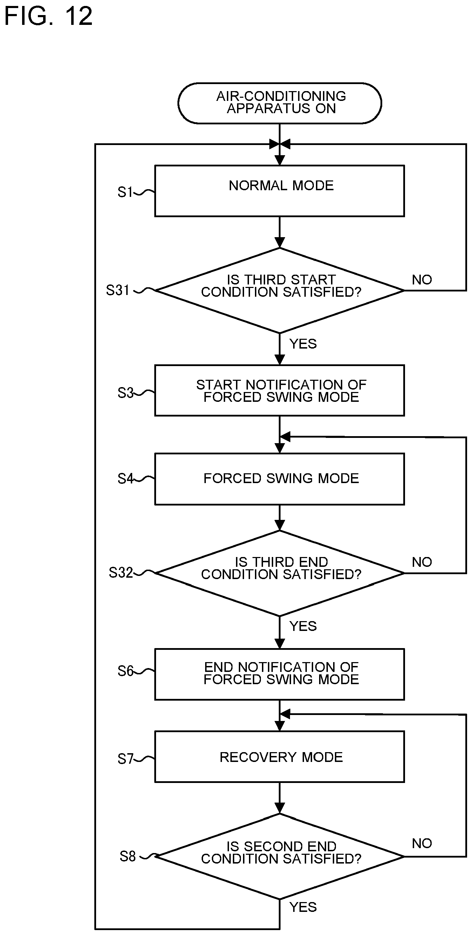

Fig. 12 is a flowchart illustrating an operation of the controller 15 according to Embodiment 4. First, when the air-conditioning apparatus 1 is turned on, the control unit 41 causes the air-conditioning apparatus 1 to operation in the normal mode (S1). The control unit 41 periodically determines whether or not the third start condition is met during execution of the normal mode (S31). When the third start condition is not satisfied (NO in S31), the control unit 41 continues the normal mode (S1).

When the third start condition is met (YES in S31), the control unit 41 performs notification of start of the forced swing mode (S3), and causes the air-conditioning apparatus 1 to operate in the forced swing mode (S4). The control unit 41 periodically determines whether or not the third end condition is met during execution of the forced swing mode (S32). When the third end condition is not satisfied (NO in S32), the forced swing mode is continued (S4).

When the third end condition is met (YES in S32), the control unit 41 performs notification of end of the forced swing mode (S6). Because the subsequent steps (S7 and S8) are the same as those of Embodiment 3, their description will be omitted.

According to Embodiment 4, the time of sending air to an opened window is shortened, and the air volume toward the opened window is reduced. Thus, a ventilation passage passing through the opened window is not interrupted. Therefore, discharge of floating droplets to the outside can be promoted.

### Embodiment 5

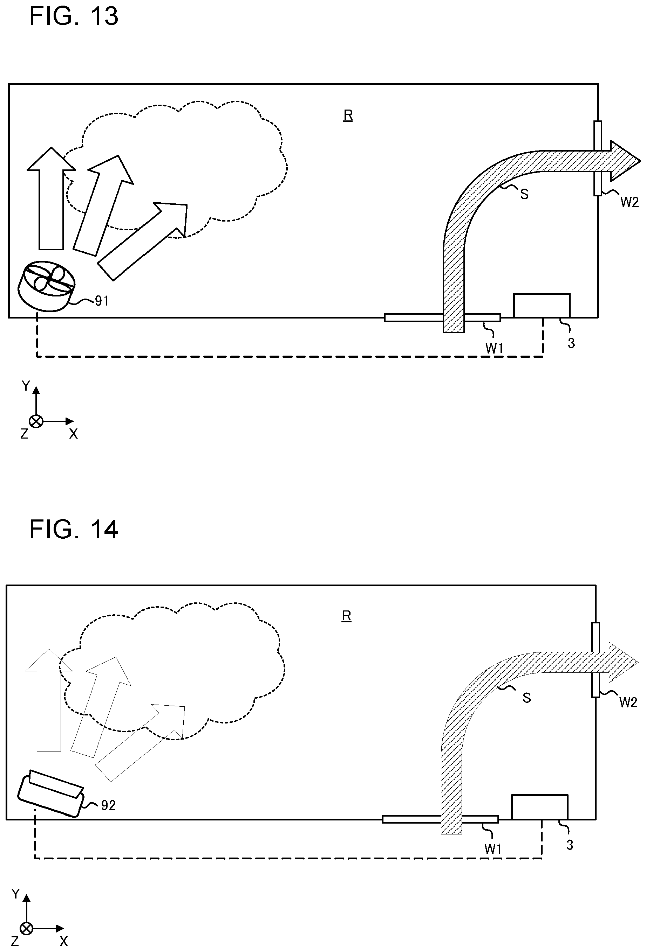

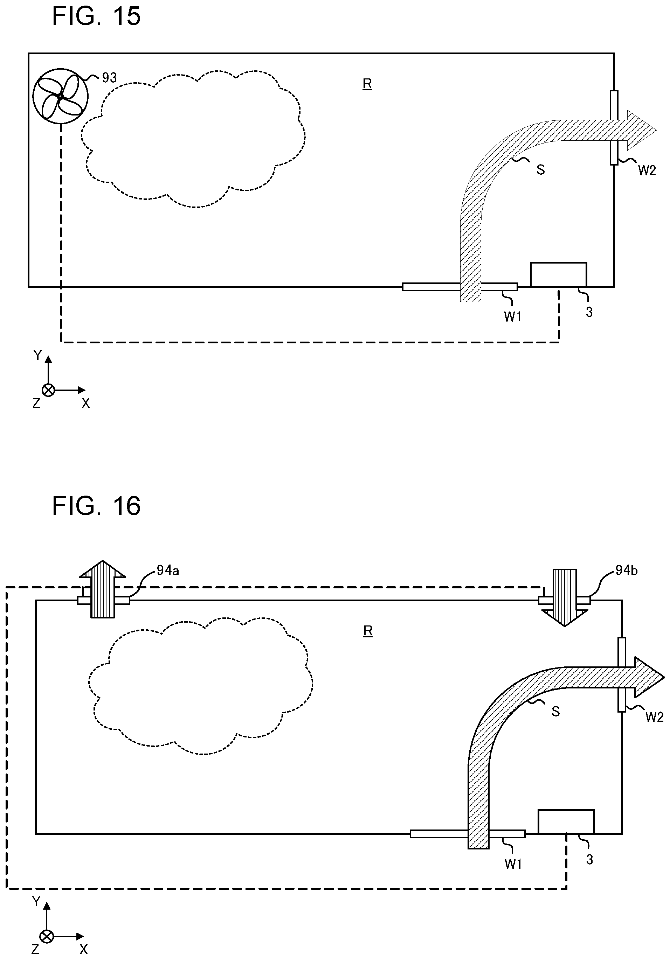

Fig. 13 is a schematic configuration diagram illustrating an air-sending system 100 according to Embodiment 5. Fig. 14 is another schematic configuration diagram illustrating the air-sending system 100 according to Embodiment 5. Fig. 15 is still another schematic configuration diagram illustrating the air-sending system 100 according to Embodiment 5. Fig. 16 is yet another schematic configuration diagram illustrating the air-sending system 100 according to Embodiment 5. Fig. 13 shows the air-sending system 100 including the air-conditioning apparatus 1 and a circulator 91. Fig. 14 shows the air-sending system 100 including the air-conditioning apparatus 1 and an air purifier 92. Fig. 15 shows the air-sending system 100 including the air-conditioning apparatus 1 and an exhaust fan 93. Fig. 16 shows the air-sending system 100 including the air-conditioning apparatus 1, and an exhaust opening 94a and an air supply opening 94b of Class 1 ventilation equipment. As shown in Figs. 13 to 16, Embodiment 5 differs from Embodiments 1 to 4 in that a plurality of air-sending devices having an air-sending function forms the air-sending system 100. In Embodiment 5, the same features as those of Embodiments 1 to 4 will be denoted by the same reference signs, and their descriptions will be omitted. Differences from Embodiments 1 to 4 will be mainly described in Embodiment 5.

Here, the circulator 91, the air purifier 92, the exhaust fan 93, and the exhaust opening 94a and the air supply opening 94b of Class 1 ventilation equipment are collectively referred to as the other air-sending devise. The air-conditioning apparatus 1 and the other air sending device are connected to each other via a home energy management system (HEMS) or Wireless Fidelity (Wi-Fi). When the controller 15 causes the air-conditioning apparatus 1 to operate in the forced swing mode, the air-conditioning apparatus 1 sends, to the other air-sending device, an instruction for starting a link operation and an instruction for ending the link operation, as control information. When the other air-sending device receives the instruction for starting a link operation, the other air-sending device starts an air-sending operation. In addition, when the other air-sending device is capable of controlling the airflow direction in a lateral direction or vertical direction, the airflow direction is controlled to swing in that direction. When receiving the instruction for ending the link operation, the other air-sending device ends the air-sending operation. Thus, the air-sending system 100 of Embodiment 5 can eliminate a local high concentration of floating droplets in the space where the air-sending device is installed, even when the local high concentration occurs in a region where air supplied from the air-conditioning apparatus 1 hardly reaches. As a result, the air-sending system 100 according to Embodiment 5 can implement countermeasures against infectious diseases.

Although Embodiments of the present disclosure are described above, the present disclosure is not limited to the above embodiments. Various modifications or combinations are conceivable within the technical ideas of the present disclosure. For example, the embodiments are explained by using a household air-conditioning apparatus as an example. However, the subject matter disclosed in the embodiments may be applied not only to the air-conditioning apparatus 1 for household use but also to a variable refrigerant flow (VRF) system or an air-conditioning apparatus 1 for vehicle, such as a train or car. Furthermore, the subject matter disclosed in the embodiments may be applied not only to the air-conditioning apparatus 1 but also to an air-sending device having an air-sending function, other than an air-conditioning apparatus, such as a circulator, an air purifier, a dehydrator, or a ventilation device. For example, in a case of the circulator 91, the oscillating mechanism corresponds to an airflow direction adjusting unit.

Moreover, the features disclosed in Embodiments 1 to 4 may be combined with each other, as appropriate. For example, in Embodiment 3, the forced swing mode may be started based on the first start condition described in Embodiment 1. In addition, in each embodiment, the first start condition and the third start condition may be used together. Furthermore, the forced swing mode may be started based on only the staying time of the second start condition.

In addition, in Embodiment 1, only one of the airflow direction, the swing speed, and the air volume may be controlled. In Embodiment 2, only either one of the swing speed and the air volume may be controlled based on the position of a ventilation opening or a ventilation device. In Embodiment 3, only one of the airflow direction, the swing speed, and the air volume may be controlled based on the position of a person staying in the room. In Embodiment 4, only either one of an open swing speed or the air volume may be controlled.

Furthermore, in each embodiment, a sensor that detects the temperature of an inlet, an outlet, or an intermediate part of the outdoor heat exchanger 7 or the indoor heat exchanger 10 may be provided.

Moreover, although the indoor unit 3 includes the controller 15 in each embodiment, the controller 15 may be provided in the outdoor unit 2. The controller 15 may be provided outside the outdoor unit 2 and the indoor unit 3. Alternatively, the controller 15 may be divided into two or more controllers according to the functions so that one controller is implemented in the outdoor unit 2 and another is implemented in the indoor unit 3. In this case, the controllers may be connected to each other via wireless or wired connection such that the controllers can communicate with each other.

In addition, the start notification of each embodiment does not have to include the information asking the user to open a window in the room. Even when a window in the room is not opened, a local high concentration of floating droplets in the space where the air-sending device is installed can be eliminated.

In each embodiment, the forced swing mode may be started based on a start instruction from the user. Note that, the start instruction from the user may be a substitute or supplemental condition for the first start condition of Embodiment 1. Thus, the forced swing mode can be started at a timing that the user feels necessary.

In addition, in each embodiment, the forced swing mode may be ended based on an end instruction from the user. Note that, the end instruction from the user may be a substitute or supplemental condition for the first end condition of Embodiment 1. Thus, the forced swing mode can be ended at a timing that the user feels necessary.

In each embodiment, the first time may be changed based on the number of people staying in the room. For example, when there are relatively many people, such as four people or more, staying in the room, the first time may be set to a time earlier than 30 minutes.

In addition, in each embodiment, when the number of people staying in the room is equal to or greater than a threshold, the forced swing mode may be executed immediately

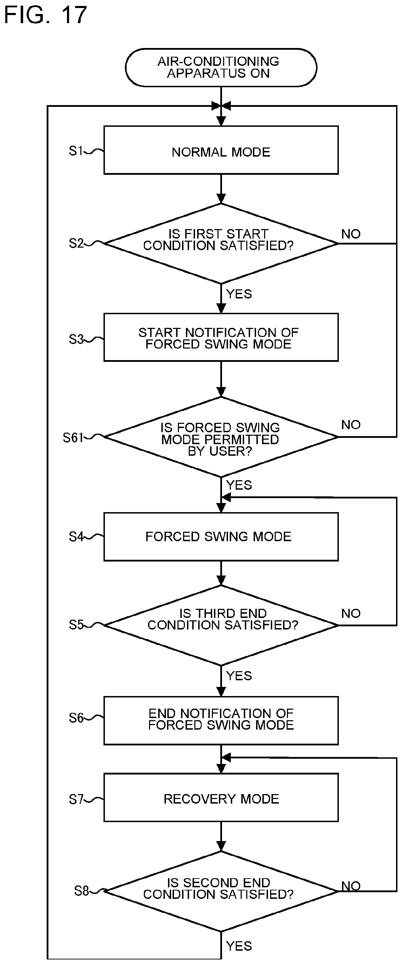

Furthermore, in each embodiment, the start notification of the forced swing mode may include a message that asks the user whether to allow the operation mode to be shifted into the forced swing mode. Fig. 17 is a flowchart illustrating an operation of the controller 15 according to a modification example of Embodiment 1. As shown in Fig. 17, when the first condition is met and the start notification is displayed (S2), the user inputs, from the operation unit 36a of the remote controller 36, whether or not to allow the operation mode to be shifted into the forced swing mode. When input is performed, the control unit 41 determines whether or not shifting into the forced swing mode is allowed by the user (S61). When shifting into the forced swing mode is allowed (YES in S61), the control unit 41 execute the forced swing mode (S4). When shifting into the forced swing mode is not allowed (NO in S61), the control unit 41 causes the air-conditioning apparatus 1 to continue the normal mode (S1). Thus, the forced swing mode can be started at a timing that the user feels necessary.

Moreover, in each embodiment, the forced swing mode may be started based on a condition that an air-conditioning load is low. The air-conditioning load may be obtained based on, for example, the frequency of the compressor 5, the difference between the setting temperature and the indoor temperature, the rotation speed of the outdoor fan 8 or indoor fan 11, or the refrigerant flow rate. Note that, the determination of the air-conditioning load may be used as a substitute or supplemental condition for the first to third start conditions of the embodiments. Thus, because a window is opened for ventilation when the air-conditioning load is low, the indoor temperature being changed due to the opening of the window can be quickly returned to the original indoor temperature. In addition, because the compressor 5 is prevented from operating at the maximum frequency when a window is opened, an increase in the cost of electricity can be avoided.

In the first place, in each embodiment, the air-conditioning apparatus 1 may be configured to constantly operate in the forced swing mode according to an instruction of the user.

Furthermore, in each embodiments, a terminal device, such as a smartphone or a tablet, of the user may be used in place of the remote controller 36 dedicated for the air-conditioning apparatus 1. In this case, a dedicated application that enables communication with the air-conditioning apparatus 1 is installed in the terminal device of the user. The start notification, the start permission, the end notification, a forced termination instruction, and the notification of a sudden change in temperature of the forced swing mode, and input of the positions of a window and a ventilation opening are performed through the application.

In addition, in each embodiment, the air-conditioning apparatus 1 may be provided with a speaker to perform the start notification, the end notification, and the notification of a sudden change in temperature by sound. Thus, the user can recognize the operation status of the air-conditioning apparatus 1 even when the user does not have the remote controller 36 on hand. In addition, a lamp may be provided on a surface of the indoor unit 3 to perform notification by lighting or flashing.

Moreover, in each embodiment, a particle concentration sensor, such as a PM2.5 sensor, may be provided in the room or on the air-conditioning apparatus 1 and may be linked with the air-conditioning apparatus 1 to check how well stagnation is eliminated. A distribution of droplet concentration may be displayed on the application of the terminal device of the user via HEMS.

Furthermore, in Embodiment 3 or 4, a crowded area with people staying in the room may be detected by using the thermal image, and the droplet concentration may be estimated based on the sound of conversation at the crowded area.

In addition, in Embodiment 3 or 4, a window being opened and a person staying in the room may be detected by using a distance sensor, instead of using the infrared sensor 37.

In Embodiment 4, when a window from which an outdoor air wind enters and a window from which the wind exits can be estimated or the flow of air in the room can be estimated from the sizes and positions of windows, an outdoor air condition, and an observation by a person in the room, a ventilation mode may be executed in which air is sent in a constant direction toward the window from which the outdoor air wind exists. When the ventilation mode is performed, discharge of floating droplets to the outside can be promoted. In addition, the ventilation mode and the forced swing mode may be performed in order, but the order is not limited to any particular order. For example, when there are many people staying in the room, the ventilation mode is performed first for preferentially discharging floating droplets. When there are a few people staying in the room, the forced swing mode is performed first for preferentially equalizing distribution of floating droplets.

In addition, although, in Embodiment 4, the position of a window is detected by the infrared sensor 37, the position of a window may be detected by using a terminal device of the user. More specifically, the air-conditioning apparatus 1A is configured to transmit a thermal image captured by the infrared sensor 37 to a terminal device of the user. The terminal device of the user displays the thermal image by using a dedicated application. The user inputs the position of a window from the displayed thermal image, and the terminal device transmits the input coordinate information to the air-conditioning apparatus 1. Thus, the air-conditioning apparatus 1A can detect the position of the window.

Furthermore, in Embodiment 2, the time of sending air to a ventilation opening or a ventilation device is shortened and the volume of air sent thereto is reduced. However, sending of air may be controlled to avoid a ventilation opening. More specifically, in Fig. 6, the up-and-down flaps 32 are controlled to swing except in the vertical air-sending range β, which corresponds to the position at which the ventilation opening V is installed. In this case also, a ventilation passage passing through the ventilation opening or ventilation device is not interrupted. Therefore, discharge of floating droplets to the outside can be promoted.

In Embodiment 4, the time of sending air to an opened window is shortened and the volume of air sent thereto is reduced. However, sending of air may be controlled to avoid an opened window. More specifically, in Fig. 11, the right-and-left flaps 33 are controlled to swing except in the lateral air-sending range γ, which corresponds to the position at which the opened window W3 is present. In this case also, a ventilation passage passing through the ventilation opening or ventilation device is not interrupted, as with the case of Embodiment 4. Therefore, discharge of floating droplets to the outside can be promoted.

### Reference Signs List

1: air-conditioning apparatus, 1A: air-conditioning apparatus, 2: outdoor unit, 3: indoor unit, 3A: indoor unit, 5: compressor, 6: flow switching valve, 7: outdoor heat exchanger, 8: outdoor fan, 9: expansion valve, 10: indoor heat exchanger, 11: indoor fan, 15: controller, 31: casing, 31a: air inlet, 31b: air outlet, 32: up-and-down flap, 32a: up-and-down flap, 32b: up-and-down flap, 32c: up-and-down flap, 32d: up-and-down flap, 32e: up-and-down flap, 33: right-and-left flap, 34: indoor temperature sensor, 35: infrared communication device, 36: remote controller, 36a: operation unit, 36b: display unit, 37: infrared sensor, 41: control unit, 42: detection unit, 51: storage unit, 91: circulator, 92: air purifier, 93: exhaust fan, 94a: exhaust opening, 94b: air supply opening, 100: air-sending system

## Claims

1. An air-sending device comprising:
a fan configured to blow air into a space;
an airflow direction adjusting unit configured to adjust an airflow direction of the air blown out from the fan; and
a controller configured to control the fan and the airflow direction adjusting unit,
wherein the controller is configured to, when a predetermined condition is met, execute a forced swing mode regardless of a setting made by a user for the airflow direction, the forced swing mode being a mode in which a swing operation in which the airflow direction adjusting unit is controlled to change the airflow direction over time is forcibly performed.

2. The air-sending device of claim 1, wherein
the controller is configured to start the forced swing mode when a time elapsed since the forced swing mode was performed last time exceeds a first time.

3. The air-sending device of claim 1 or 2, wherein
the controller is configured to notify a user of start of the forced swing mode when the forced swing mode is started.

4. The air-sending device of any one of claims 1 to 3, wherein
the controller is configured to start the forced swing mode when the controller receives a start instruction from a user.

5. The air-sending device of any one of claims 1 to 4, wherein
the controller is configured to end the forced swing mode when the controller receives an end instruction from a user.

6. The air-sending device of any one of claims 1 to 5, wherein
the controller is configured to continue the swing operation after the forced swing mode is ended.

7. The air-sending device of any one of claims 1 to 6, wherein
the controller is configured to ask a user whether or not to permit starting of the forced swing mode and start the forced swing mode when the controller receives from the user a permission for starting the forced swing mode.

8. The air-sending device of any one of claims 1 to 7, further comprising:
an infrared sensor configured to obtain a thermal image of the space,
wherein the controller is configured to detect a user staying in the space based on the thermal image, and start the forced swing mode when a time period of detecting the user in the space exceeds the first time.

9. The air-sending device of claim 8, wherein
the controller is configured to start the forced swing mode when a number of users detected in the space is equal to or greater than a threshold.

10. The air-sending device of claim 8 or 9, wherein
the controller is configured to control the fan in the forced swing mode so that a volume of air sent to the user detected in the space is set to be larger than a volume of air sent in other directions.

11. The air-sending device of any one of claims 8 to 10, wherein
the controller is configured to control the airflow direction adjusting unit in the forced swing mode so that a speed for changing the airflow direction is increased as a distance to the user detected in the space decreases.

12. The air-sending device of any one of claims 8 to 11, wherein
the controller is configured to control the airflow direction adjusting unit in the forced swing mode so that a direction of air blown out from the fan is changed with the position of the person as a center.

13. The air-sending device of any one of claims 8 to 12, wherein
the controller is configured to detect a window being opened in the space based on the thermal image, and start the forced swing mode when the window is opened.

14. The air-sending device of claim 13, wherein
the controller is configured to control the fan in the forced swing mode so that a volume of air sent to the opened window detected in the space is set to be smaller than a volume of air sent in other directions.

15. The air-sending device of claim 13 or 14, wherein
the controller is configured to control the fan in the forced swing mode so that a time of sending air to the opened window detected in the space is set to be shorter than a time of sending air in other directions.

16. The air-sending device of any one of claims 13 to 15, wherein
the controller is configured to control the airflow direction adjusting unit in the forced swing mode so that sending of air to the window is avoided.

17. The air-sending device of any one of claims 1 to 16, wherein
the controller is configured to control the fan in the forced swing mode so that a volume of air sent to a ventilation opening is set to be smaller than a volume of air sent in other directions.

18. The air-sending device of any one of claims 1 to 17, wherein
the controller is configured to control the fan in the forced swing mode so that a time of sending air to a ventilation opening is set to be shorter than a time of sending air in other directions.

19. The air-sending device of claim 17 or 18, wherein
the controller is configured to control the airflow direction adjusting unit in the forced swing mode so that sending of air to the ventilation opening is avoided.

20. An air-sending system comprising:
a plurality of the air-sending devices of any one of claims 1 to 19, the plurality of air-sending devices being configured to operate in conjunction with each other.

21. The air-sending system of claim 20, wherein
the controller of one of the plurality of air-sending devices is configured to communicate with the controller of another air-sending device to transmit thereto an instruction for starting a link operation and an instruction for ending a link operation.
